# EUROPEAN PATENT APPLICATION

(11) **EP 4 428 014 A1**
(43) Date of publication of application: **11.09.2024**
(21) Application number: 24305284.2
(22) Date of filing: 21.02.2024
(51) Int. Cl.: B62D 27/02, B62D 31/02

(54) **IMPROVED CONNECTION FOR VEHICULAR FRAME OF A PUBLIC TRANSPORT VEHICLE**

(30) Priority: 06.03.2023 IT 202300004041; 06.03.2023 IT 202300004056
(71) Applicant: IVECO FRANCE S.A.S., 69200 Vénissieux (FR)
(72) Inventor: NIGNOL, Christophe, 69200 VENISSIEUX (FR); LUSSEAU, Nino, 69200 VENISSIEUX (FR)
(74) Representative: Studio Torta S.p.A.

(57) **Abstract**

Connection system (10, 20) for connecting at least a pair of elements (E) making part of a frame (1) for a public transport vehicle, the connection system (10) comprising at least one mask (10', 20') comprising at least a first wall (10a) and a second wall (10b) configured to be fixed to the at least pair of elements (E) for fixing these latter together.

## Description

### CROSS-REFERENCE TO RELATED APPLICATIONS

This patent application claims priority from Italian patent applications no. 102023000004056 and no. 102023000004041 both filed on March 6, 2023, the entire disclosure of which is incorporated herein by reference.

### TECHNICAL FIELD

The present invention concerns an improved connection for vehicular frame.

The present invention finds its preferred, although not exclusive, application in public transport vehicles such as buses. Reference will be made to this application by way of example below.

### BACKGROUND OF THE INVENTION

Public transport vehicles such as buses, and vehicle in generals, are provided with a frame/chassis that defines one of the structural portions of the vehicle.

To such frame the body of the vehicle is attached and some operational systems are fixed.

In order to provide sufficient strength, the bus chassis is realized via steel bars that are welded together to define a reticular structure defining the shape of the frame. Such frame usually defines a roof and a pair of lateral walls. Optionally, also part of the pavement may be defined by the frame.

The welding between bars clearly provided a resistant and fixed connection between these latter. However, welding also leads to some drawbacks.

First, welding may be realized only between the same or similar materials. Indeed, welding between different metals such as steel or aluminum is difficult or permissible by using very special techniques and alloys that increase exponentially manufacturing costs.

Second, welding is a complex and long operation and at least a minimum thickness of the elements to be welded is required in order to reduce risk of thermal deformation and to allow welding. This required thickness is however oversized with respect to structural needs of the frame, thereby increasing weight, cost and vehicular fuel consumption.

Third, it is well known that welding joint portion is keener to corrosion, such as rust and therefore to crack formation that may lead to damages. Therefore, constant maintenance is needed and special operations such as cataphoresis are needed after welding is performed.

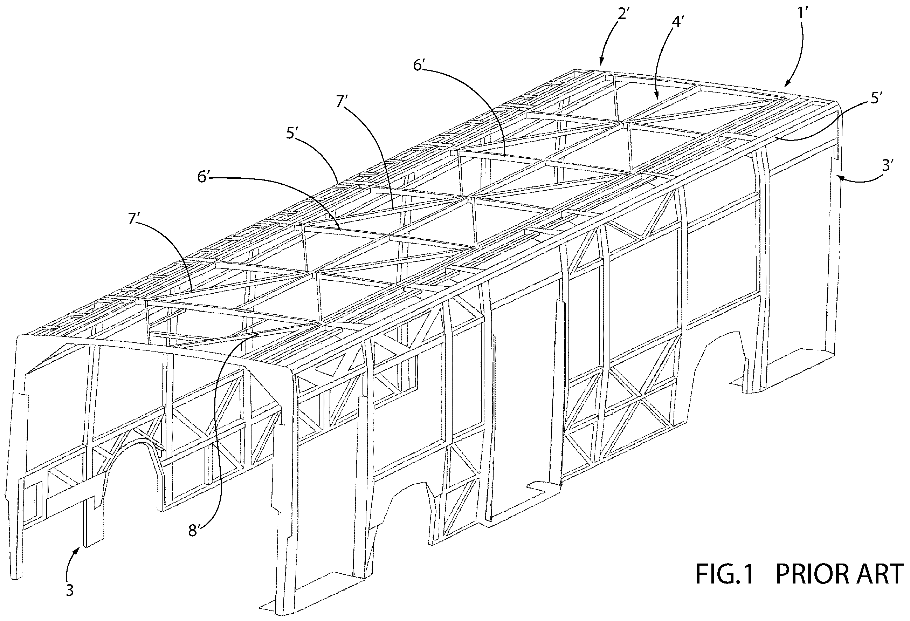

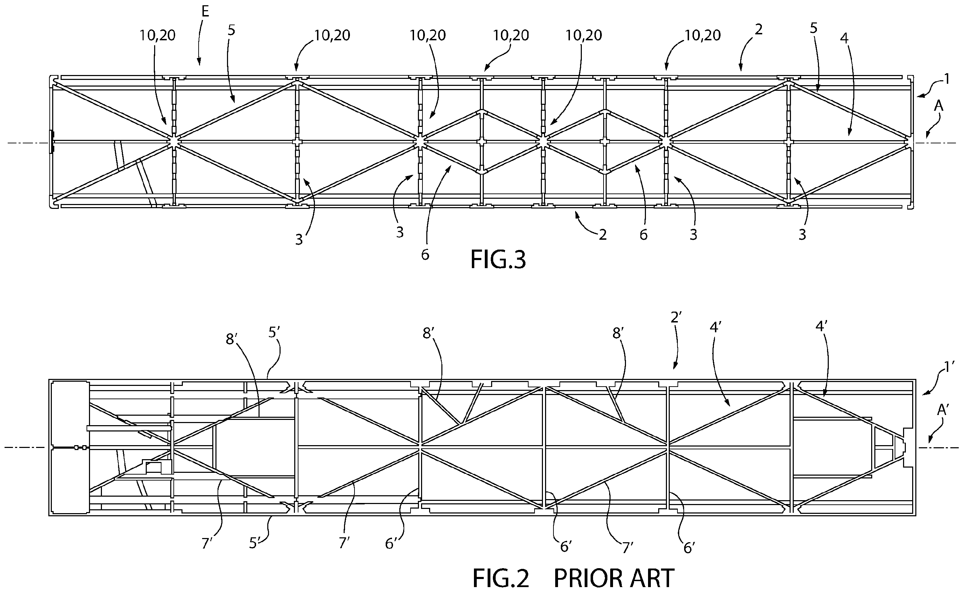

Existing frame, therefore, in order to allow access for welding and to reduce welding material have a shape as depicted in figures 1 and 2 that discloses a prior art frame 1'.

Such frame 1' comprises a roof 2' and a pair of lateral walls 3' extending perpendicularly from roof 2'. Both roof 2' and walls 3' are realized via a reticular structure defined by a plurality of elements 4'. Making reference to figure 2, the roof 2' is realized via a pair of longitudinal elements 5' realized substantially as single pieces extending all over the longitudinal axis A' of the frame 1'.

Such pair of longitudinal elements 5' is connected on a direction transversal with respect to longitudinal axis A' by a plurality of transversal bars 6' that are spaced along longitudinal axis A' and by a plurality of inclined bars 7' crossing the longitudinal elements 5' and the transversal bars 6'. In particular, inclined bars 7' are places to define a plurality of rhombuses along axis A' direction. Further connection elements 8' are placed between the inclined bars 7' and the longitudinal elements 5' in order to strengthen the overall structure.

Clearly, the above structure results heavy and complex but allows the use of welding technique between the different elements of the frame 1'.

In addition to the above, the energy/gas needed for welding operation for elements making up a frame defining a roof of a public transport vehicle is not negligible in the manufacturing overall cost of vehicle production.

In view of the above, the need is felt to provide a frame that has the same structural properties of the existing ones without drawbacks linked to welding technique.

An aim of the present invention is to satisfy the above mentioned needs in a cost-effective and optimized manner.

### SUMMARY OF THE INVENTION

The aforementioned aim is reached by an improved connection for frame elements, a frame and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is perspective schematic view of a bus frame as known in the art;
- Figure 2 is top schematic view of a bus frame as known in the art;
- Figure 3 is top schematic view of a bus frame according to the invention;
- Figure 4 is a schematic perspective exploded view of a portion of the bus frame comprising a coupling according to a first embodiment of invention;
- Figure 5 is a schematic perspective view of further a portion of the bus frame comprising a coupling according to a first embodiment of the invention;
- Figure 6 is a schematic exploded view of a portion of the bus frame comprising a coupling according to a second embodiment of invention;
- Figure 7 is a schematic perspective view of further a portion of the bus frame comprising a coupling according to a second embodiment of the invention; and
- Figures 8 to 10 are perspective view of exemplarily shape elements of the coupling according to the first and second embodiments of the invention.

### DETAILED DESCRIPTION OF THE INVENTION

Figure 3 discloses a frame 1 comprising a plurality of elements E connected in a reticular fashion via a connection system 10, 20 according to the invention and as described further in detail.

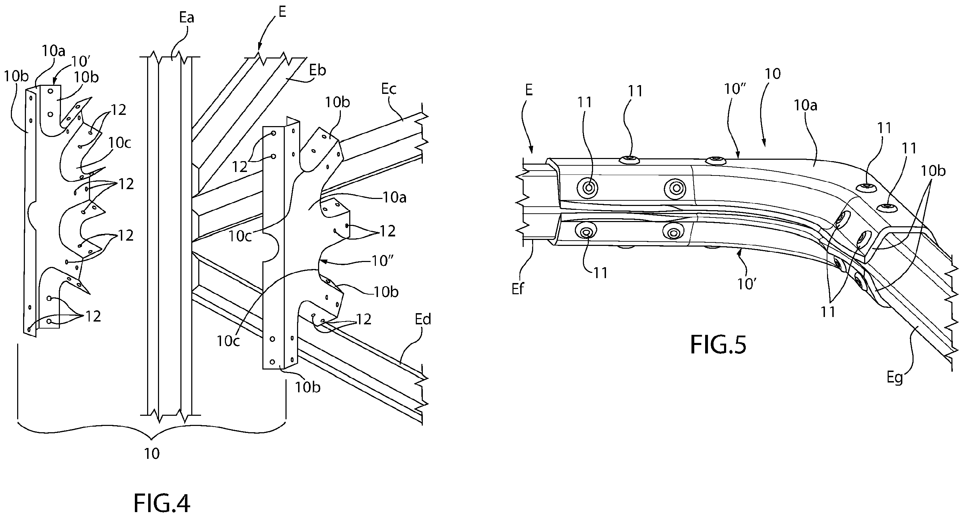

Figures 4 and 5 disclose two alternative construction arrangements of a first embodiment of a connection system 10 for connecting the aforementioned different elements E of the aforementioned frame 1.

In such embodiment, the connection system 10 comprises a pair of fixing masks 10', 10" connected together by fixing means 11 housed within openings 12 realized in fixing masks 10', 10''.

Each pair of masks 10', 10'' comprises a main plate 10a and a pair of lateral walls 10b extending from at least part of the perimeter of the main plate 10a. The main plate 10a and the lateral walls 10b are shaped to allow the cooperation at contact with the peculiar geometric arrangement of walls of the elements E that needs to be connected together and defines the aforementioned openings 12.

Making reference to figure 4, it is disclosed a connection system 10 configured to allow the connection between four elements E, namely a main element Ea and three secondary elements Eb, Ec, Ed. In the disclosed embodiment, the secondary elements Eb, Ec, Ed and the main element Ea are contained in the same plane and the secondary elements Eb, Ec, Ed extend getting away in different directions from the main element Ea.

Consequently, the main plate 10a of the embodiment of figure 4 have a main longitudinal portion configured to cooperate with the main element Ea and three secondary portions extending from the main longitudinal portion configured to cooperate with the secondary elements Eb, Ec, Ed.

The lateral walls 10b extends from substantially all the perimeter of the main plate 10a except in corners where the lateral walls 10b are separated or joint by a joint portion 10c that is preferably curved.

The openings 12 are realized on radial extremities of the masks 10', 10'' on each lateral wall 10b and the central plate 10a and linearly aligned one with the other both along a radial and a circumferential direction with respect to the center of mask 10', 10".

Fixing means 11 are preferably rivets or any equivalent fixation means such as screws or bolts.

Making reference to figure 5, it is disclosed a connection system 10 configured to allow the connection between two elements E, namely a pair of elements Ef, Eg, connected at their extremities in an incident manner, e.g. perpendicular one to the other.

Consequently, each mask 10', 10" comprises a main plate 10a and a pair of lateral walls 10b having substantially the same function of the arrangement of figure 4.

In its longitudinal extremities, the masks 10', 10" defines the openings 12 that are realized on each lateral wall 10b and the central plate 10a. In the disclosed arrangement the openings 12 and linearly aligned one with the other both along a radial and a circumferential direction with respect to the center of mask 10', 10".

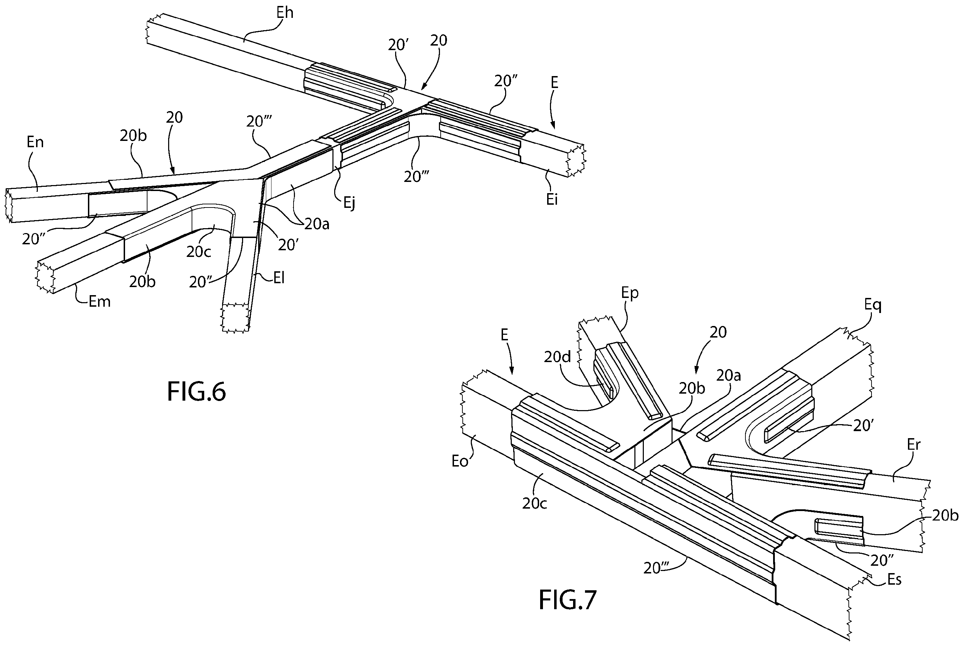

Figures 6 and 7 disclose two alternative construction arrangements of a second embodiment of a connection system 20 for connecting the aforementioned different elements E of the aforementioned frame 1.

In such embodiment, the connection system 20 comprises a plurality of fixing masks 20', 20'', 20''' connected to elements E via gluing.

Non limitative examples of gluing materials are epoxydic, acrylic, urethane, polyurethane, glues.

Each fixing mask 20', 20", 20‴ comprises at least a first wall 20a and a second wall 20b connected together in an incident manner, e.g. orthogonally and shaped to follow the geometric arrangement of the elements E connected together.

The fixing masks 20', 20", 20‴ may further comprise a joint portion 20c configured to connect a first and a second walls that are not connected into a perpendicular way one with respect to the other.

The fixing masks 20', 20", 20‴ may further comprise a third wall 20d incident with respect to at least one between the first and second walls 20a, 20b.

Walls 20a, 20b, 20c are configured to cooperate at contact with the elements to be connected by interposition with the aforementioned glue.

Making reference to figure 6, it is disclosed a connection system 20 configured to allow the connection between three elements Ei, Eh, Ej via a three masks 20', 20'', 20''' shaped in order to allow the connection of the three elements as a "T" and a further connection system 20 configured to allow the connection between one of the aforementioned three elements Ej to three further elements El, Em, En that extends diverging one with respect to the other from the element Ej. Such further connection system 20 comprises four masks 20', 20‴, 20‴, 20ʺʺ configured to be fixed to different sides of the elements Ej, El, Em, En to allow their mutual fixation.

Figure 7 discloses a connection system 20 configured to connect five elements Eo, Ep, Eq, Er, Es. Such connection system comprises three masks 20', 20", 20‴ configured to surround different sides of the aforementioned five elements Eo, Ep, Eq, Er, Es to allow their mutual fixation. In such case one of the masks 20' comprises three walls 20a, 20b, 20c and one of the masks 20‴ has a first wall 20a that extends all over the five elements Eo, Ep, Eq, Er, Es.

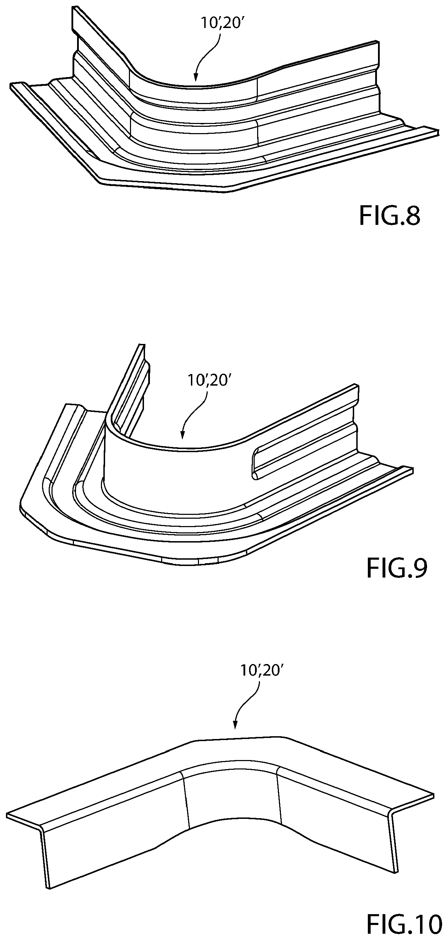

As said, masks 10', 20' may have different shapes as exemplified in figures 8, 9 and 19 that discloses different shapes of bent masks 10', 20'.

An example of frame 1 that can be arranged via connection system 10, 20 is shown in figure 3. It is noticed that the frame 1 may constitute the support structure for a roof and side walls of a public transport vehicle, and, if necessary for front and rear wall thereof.

Such frame 1 comprises a pair of longitudinal external side member 2 that are realized via a plurality of elements E connected together via connection system 10, 20. In the shown example, such longitudinal external sides 2 are realized via elements E having different extensions along longitudinal axis A of the vehicle.

The longitudinal external side members 2 are connected transversally along axis A, in particular perpendicularly, via a plurality of transversal bars 3 that are realized via a plurality of elements E connected together via connection system 10, 20. In the shown example, such transversal bars 3 are realized via elements E having different extensions along the aforementioned transversal direction.

Frame 1 further comprises a longitudinal inner bar 4 that extends parallel with respect to side members 2, transversally comprised between these latter and realized via a plurality of elements E connected together via connection system 10, 20. In the shown example, such longitudinal inner bar 4 is realized via elements E having different extensions along longitudinal axis A of the vehicle.

The frame 1 advantageously comprises inclined bars 5, 6 operatively connected between at least one among the transversal bars 3, the longitudinal side elements 2 and the inner longitudinal bar 4.

Such inclined bars 5, 6 are generally realized as a single element E that is connected at its extremity to the aforementioned portions of the frame 1 via a connection system 10, 20.

The inclined bars 5, 6 are disposed one to the other in order to define a plurality of rhombuses shape along longitudinal axis A. In particular, such rhombuses may overall connect together the longitudinal side elements 2 via transversal bars 3 and the inner longitudinal bar 4 or merely connect together a plurality of transversal bars 3 and inner longitudinal bar 4.

Via use of the connection system 10, 20 the elements E may be realized in different materials, such as a polymeric material, e.g. plastic. In particular, different plastic/polymers may be used in the same frame 1.

The operation of the embodiment of the invention as described above is the following.

The frame 1 can be assembled by connection system 10, 20, in particular by posing masks 10', 20' shaped to follow the requested connection shape and fixing this latter by fixing means 11 or by gluing.

In view of the foregoing, the advantages of a connection system and a related frame according to the invention are apparent.

Thanks to the use of connection system the welding between elements of which the frame is composed is avoided.

Therefore, there is no need to provide sufficient thickness in such elements and there is no need to use specific metals, in particular different and lighter material can be used.

Moreover, there is no need of specific operations such as cataphoresis in order to reduce corrosion caused by welding and there is no risk of heat deformation in the aforementioned elements always linked to welding.

Moreover, since no welding is necessary, there is less energy/gas consumption during the manufacturing of the roof made up by a frame as known in the art.

Therefore, the overall cost of manufacturing is reduced since the assembly of the frame is simpler and quicker. Indeed, the proposed connection system may be provided for different and complex geometries that could be welded with difficulty.

Moreover, the overall weight of the frame can be reduced. for sake of example, the depicted frame provided with elements with different lengths and materials can save about 50kg with respect to existing frames.

In addition to the above, the strength of the frame is the same of the existing ones or can be further increased due to the new and peculiar geometries that can be provided via such connection systems.

It is clear that modifications can be made to the described connection system and related frame which do not extend beyond the scope of protection defined by the claims.

As extensively stated, the shape and number of masks of connection system may vary according to shape and number of elements to be connected together.

Any material that allows sufficient mechanical strength for vehicular field can be used for masks and elements of the frame.

The shape of the parts of the frame may vary within the limits of the below claims and clearly dimensions and number of elements of such frame are dependent to vehicle use and size.

## Claims

1. Connection system (10, 20) for connecting at least a pair of elements (E) making part of a frame (1) for a public transport vehicle, said connection system (10) comprising at least one mask (10', 20') realized in polymeric or plastic material and comprising at least a first wall (10a) and a second wall (10b) configured to be fixed by gluing to said at least pair of elements (E) for fixing these latter together.

2. Connection system according to claim 1, wherein said connection system (10) comprises a pair of masks (10', 10") connected together by fixing means (11) in order to fix together said elements (E).

3. Connection system according to claim 2, wherein said second wall (10b) extends over at least part of the perimeter of said first wall (10a).

4. Connection system according to claims 2 or 3, wherein at least one among said first and second walls (10a, 10b) defines a plurality of holes (12) for allowing the insertion of said fixing means (11).

5. Connection system according to claim 4, wherein said holes (12) are realized in terminal portions of said at least one among said first and second walls (10a, 10b).

6. Connection system according to claim 4 or 5, wherein said holes (12) are realized in both said first and second walls (10a, 10b) and aligned between said first and second walls (10a, 10b).

7. Connection system according to any of claims 2 to 6, further comprise a joint portion (10c) connecting different second walls (10b) together.

8. Connection system according to claim 7, wherein said at least one mask (20') comprises at least a third wall (20c) extending from said lateral wall (20b).

9. Assembly comprising at least two elements (E) connected together via a connection system (10, 20) according to any of the preceding claims.

10. Frame (1) comprising a plurality of elements (E) connected together via a connection system (10, 20) according to any of claims 1 to 8.

11. Vehicle comprising a frame (1) according to claim 10.
